(19) Europäisches Patentamt
European Patent Office
Office européen des brevets

(11) **EP 3 431 228 A1**

(12) **EUROPÄISCHE PATENTANMELDUNG**

(43) Veröffentlichungstag:
**23.01.2019   Patentblatt 2019/04**

(51) Int Cl.:
***B25J 9/16*** *(2006.01)*          ***F16P 3/14*** *(2006.01)*
***G01S 17/02*** *(2006.01)*

(21) Anmeldenummer: **17182560.7**

(22) Anmeldetag: **21.07.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder: **Walter, Maximilian**
**90408 Nürnberg (DE)**

(54) **VERFAHREN UND ANORDNUNG ZUR ÜBERWACHUNG EINES BEREICHES ÜBER DAS EINDRINGEN EINES HINDERNISSES**

(57)    Die Erfindung betrifft ein Verfahren und Anordnung zur Überwachung eines Bereiches, insbesondere eines Gefahrenbereiches, im Umfeld eines Roboters (A) einer industriellen Automatisierungsanordnung über das Eindringen eines Hindernisses, insbesondere einer Person (H), wobei wiederholt in einem ersten Schritt mittels zumindest einer Projektionseinrichtung (C) ein Muster auf eine Fläche (F) des zu überwachenden Bereiches, insbesondere auf den Fussboden, projiziert wird, in einem zweiten Schritt das Bild mittels zumindest einer Kamera (D) aufgenommen und aus diesem Bild das aufgenommene Muster extrahiert wird, in einem dritten Schritt mittels einer Auswerteeinrichtung (B) das aus dem Bild extrahierte Muster mit dem projizierten Muster verglichen wird, wobei bei einer signifikanten Abweichung der Muster voneinander das Vorliegen eines Hindernisses festgestellt wird und Sicherungsmaßnahmen initiiert werden. Dabei wird zwischen zwei Wiederholungen des ersten, zweiten und dritten Schrittes vor dem ersten Schritt das projizierte und im dritten Schritt für den Vergleich mit dem aus dem Bild extrahierten Muster herangezogene Muster zumindest teilweise verändert wird. Durch das geschilderte Verfahren müssen einige Komponenten, insbesondere die Projektionseinheit, das Kamerasystem und das Kommunikationsnetzwerk bei einem Sicherheitsnachweis nicht betrachtet werden und auch nicht in eigensicherer Variante vorgesehen werden, da eine sichere Fehleraufdeckung allein mit Hilfe der Auswerteeinrichtung möglich ist.

FIG 1
(Stand der Technik)

EP 3 431 228 A1

**Beschreibung**

Die Erfindung betrifft ein Verfahren zur Überwachung eines Bereiches gemäß dem Oberbegriff des Patentanspruchs 1, und einer Anordnung zur Überwachung eines Bereiches gemäß dem Oberbegriff des Patentanspruchs 7.

Zur Vermeidung von Unfällen bei der Annäherung zwischen Menschen und Maschinen sind verschiedene Sicherungsmaßnahmen bekannt. So ist es beispielsweise üblich, sich bewegende oder drehende Maschinenteile abzuschranken, um eine ungewollte Annäherung einer Person zu vermeiden. Weiter ist es bekannt, gefährliche Anlagenteile mittels Lichtschranken, Bewegungssensoren oder dgl. abzusichern, wobei bei der Registrierung eines Eindringens einer Person oder einer Annäherung einer Person die technische Einrichtung in einen sicheren Zustand zu überführen, beispielsweise eine Maschine abzuschalten, einen Roboter stillzulegen, Warnhinweise (Lichtblitze, Sirenen, Alarme) auszugeben und dgl.

Bei sich bewegenden Maschinenteilen, wie beispielsweise den Armen eines industriellen Roboters oder anderer Mehrachskinematiken müssen die geschilderten Sicherungseinrichtungen stets einen besonders großen Bereich absichern, der dem maximalen Aktionsradius des Roboters oder dgl. entspricht.

Bei modernen Fertigungssystemen kann es jedoch vorkommen, dass eine Interaktion zwischen Menschen und Maschinen auf vergleichsweise engem Raum stattfindet, so dass eine Absicherung des gesamten maximalen Bewegungsradius' einer Maschine oder eines Roboters oder dgl. nicht mehr zweckmäßig ist.

Das führt dazu, dass es erforderlich ist, den zu sperrenden oder gegen das Eindringen einer Person abzusichernden Bereich dynamisch zu gestalten, wozu zweckmäßiger Weise die Bewegungen eines Roboters entweder anhand seiner Programmierung und seiner derzeitigen Bewegungsdaten vorausberechnet oder zumindest abgeschätzt werden. Dann wird dynamisch derjenige Bereich, der in der nächsten Zeitperiode einen Gefahrenbereich darstellt, hinsichtlich des Vorhandenseins oder Eindringens einer Person oder eines anderen Gegenstands oder Fahrzeugs überwacht.

Eine bekannte Lösung für eine solche Überwachung eines Bereiches im Umfeld eines Roboters sieht vor, auf den zu überwachenden Bereich (z.B. Fußboden) im Umfeld der Mehrachskinematik bzw. des Roboters ein Muster zu projizieren, wobei derselbe Bereich mittels einer Kamera aufgenommen wird. Das Kamerabild bzw. das mit der Kamera abgefilmte Muster auf dem Fußboden wird mit dem projizierten Muster verglichen. Sofern es signifikante Abweichungen der beiden Muster voneinander gibt, kann angenommen werden, dass eine Abschattung oder Bildverzerrung aufgrund einer Person oder eines zuvor nicht registrierten Gegenstandes vorliegt, so dass die Anlage unverzüglich in einen abgesicherten Modus versetzt werden kann.

Die Veröffentlichung Christian Vogel, Maik Poggendorf, Christoph Walter, and Norbert Elkmann: "Towards Safe Physical Human-Robot Collaboration: A Projection-based Safety System" in: 2011 IEEE/RSJ International Conference on Intelligent Robots and Systems, September 25-30, 2011 zeigt eine solche Kamerabasierte Überwachung eines Bewegungsbereiches eines industriellen Roboters.

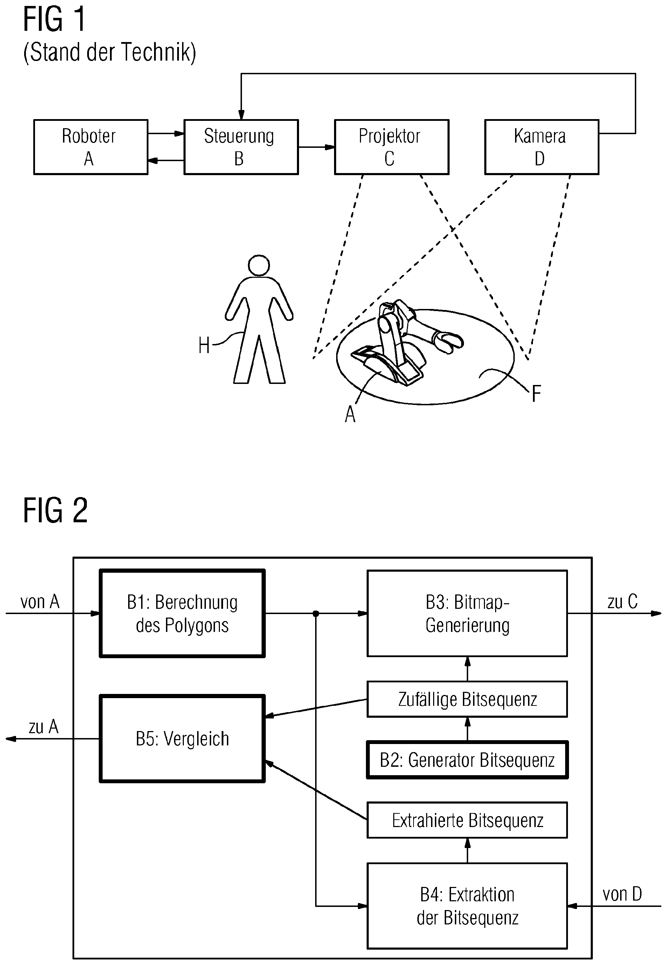

Die Figur 1 zeigt ein solches System aus dem Stand der Technik.

Das System umfasst zum Einen den Roboter, der über eine sichere Positionserkennung der einzelnen Achsen, einer sicheren Geschwindigkeitsüberwachung, sowie über ein Verfahren bzw. Mittel zum sicheren Stillsetzen bzw. die Überführung in einen sicheren Betriebszustand verfügen soll.

Weiterhin umfasst eine hier betrachtete Anordnung eine Steuerung, die aus den sicheren Achspositionen die Position und Orientierung der einzelnen Robotersegmente sowie deren Geschwindigkeiten berechnet. Aus den Daten der Steuerung kann ein dreidimensionaler Körper abgeleitet werden, der den Roboter selbst sowie ggf. Werkzeug und Werkstück einhüllt. Dieser dreidimensionale Körper muss zudem so groß gewählt sein, dass der Abstand zwischen Roboter (inklusive Werkzeug etc.) und der Hülle dieses Körpers an allen Stellen mindestens so groß ist, dass der Roboter beim Eindringen eines Menschen in diesen (gedachten) dreidimensionalen Körper noch rechtzeitig stillgesetzt werden kann, ohne dass es zu einer Kollision zwischen Mensch und Maschine kommt. Dazu wird noch die Projektion dieses dreidimensionalen Körpers auf eine Ebene, d.h. den Fußboden, berechnet, wobei als Ergebnis ein Muster (zweidimensionale Rastergrafik) entsteht. Die zu überwachende Fläche kann mittels eines umlaufenden Polygons beschrieben werden.

Es ist vorgesehen, dass die Steuerung diese Rastergrafik (Muster) an einen Projektor (oder eine Gruppe von Projektoren) sendet und dass die Steuerung umgekehrt von zumindest einer Kamera oder einem Kamera-Array ein Bild des Fußbodens und mithin der projizierten Rastergrafik (Muster) empfängt. Stimmen die Muster nicht überein, wird der Roboter in den sicheren Zustand überführt.

Somit umfasst die Anordnung auch den Projektor bzw. die Gruppe von Projektoren, die beispielsweise an einer Decke über dem Roboter befestigt ist bzw. sind und das Muster auf den Fußboden projiziert. Auf diese Weise können Menschen den Gefahrenbereich anhand des projizierten Musters erkennen. Der Gefahrenbereich ist nicht statisch, sondern hängt von der aktuellen Position und Geschwindigkeit des Roboters ab. Vorzugsweise wird der Roboter selbst von der Projektion des Musters ausgenommen, so dass nur ein ringförmiger Bereich um den Roboter herum mit dem Muster versehen wird und somit überwacht wird.

Eine weitere Komponente ist das schon angesprochene Kamerasystem, welches beispielsweise ebenfalls an der Decke befestigt sein kann und welches die Projektion des Hüllkörpers wieder in eine zweidimensionale Rastergrafik umwandelt. Die Recheneinheit, welche das Muster aus dem Kamerabild extrahiert (filtert) kann dabei Bestandteil einer Kamera sein, kann aber auch in der Steuerung oder eine externe Einrichtung angeordnet sein. Ggf. müssten die Bilder mehrerer Kameras kombiniert werden ("Kamera-Array"), falls Teile der Projektion durch den Roboter, das Werkzeug oder das Werkstück verdeckt sein können. Sobald eine Person den Gefahrenbereich betritt, fehlt ein Stück der Hüllkörperprojektion in der ermittelten zweidimensionalen Grafik bzw. dem ermittelten (extrahierten) Muster.

Ferner müssen noch ein oder mehrere Kommunikationsmittel vorgesehen sein, welche alle diese Komponenten miteinander verbindet. Um die gestellte Aufgabe der Absicherung des Bereiches mit der erforderlichen Betriebssicherheit zu erfüllen, müssen alle Komponenten (Roboter/Steuerung, Projektionseinrichtung, Kamera, Auswerteeinrichtung, Kommunikationsmittel etc.) funktional sicher implementiert sein. Während die Steuerungen von Robotern und auch Computer (Auswerteeinrichtungen, Steuerungen etc.) in entsprechend betriebssicheren Ausführungen bekannt sind, beispielsweise durch doppelt-redundante Steuerungen oder dgl., ist das für weitere erforderliche Betriebsmittel wie Projektoren und Kameras nicht der Fall.

Es kann beispielsweise der Fall auftreten, dass ein Kamerabild "einfriert", also eine Kamera nicht laufend neue Bilder erzeugt, sondern ein- und dasselbe Bild wiederholt überträgt. Dies ist ein Beispiel für einen Fehler, der dazu führen kann, dass eine Bildveränderung aufgrund einer eindringenden Person oder dgl. nicht registriert wird und daher eine gefährliche Situation eintreten kann.

Eine naheliegende Möglichkeit, die Sicherheit zu erhöhen, wäre jeweils die Verwendung mehrerer gleichartiger Komponenten (d.h. mehrere Projektoren, mehrere Kameras usw.), was jedoch mit hohen Kosten und zusätzlichem Aufwand durch den Einsatz eines weiterhin erforderlichen funktional sicheren Vergleichs verbunden wäre. Außerdem müsste geprüft werden, in welchem Maße gemeinsame Fehlerursachen zu einer Reduktion des Sicherheits-Levels führen, und ob ggf. Gegenmaßnahmen ergriffen werden müssen. Mit anderen Worten: der Einsatz von nicht-eigensicheren ("Fail-Safe") Betriebsmitteln bei der Überwachung eines Bewegungsbereiches eines Roboters oder in ähnlichen Anwendungen führt entweder zu einer verringerten Betriebssicherheit oder zu einem erhöhtem Aufwand für die mehrfach redundante Realisierung der Überwachung.

Es ist daher eine Aufgabe der vorliegenden Erfindung, die Betriebssicherheit der geschilderten Anordnung und des geschilderten Verfahrens zu erhöhen und insbesondere den Einsatz von nicht-eigensicheren Betriebsmitteln zu ermöglichen.

Zur Lösung der Aufgabe wird vorgeschlagen, dass Fehler in nicht-sicheren Komponenten (insbesondere Projektionseinrichtung und Kamera) durch eine sichere Komponente (Auswerteeinrichtung oder Steuerung) erkannt werden. Dadurch können beispielsweise die Kamera und die Projektionseinrichtung sowie die Kommunikation zu diesen Komponenten in einfacher Weise, also "nicht-sicher" oder nicht-"Fail-Safe" implementiert sein, und es kann dennoch eine nachweisbare sichere Gesamtfunktion erreicht werden. Kern der erfindungsgemäßen Lösung ist, das Projektionsbild in regelmäßigen Zeitabständen, insbesondere vor bzw. nach jedem Auswertezyklus, zu verändern. Die Bilderkennung bzw. die Auswerteeinrichtung oder Steuerung muss diese Veränderung in dem projizierten Muster rekonstruieren bzw. verifizieren. Dies ist nur dann möglich, wenn das veränderte Bild bzw. veränderte Muster korrekt projiziert und korrekt von der Kamera aufgenommen wurde, und natürlich auch nur dann, wenn das Bild bzw. Muster nicht durch eine Person verdeckt ist. Somit wird nicht nur das Eindringen einer Person in den abgesicherten Bereich sicher erkannt, sondern es werden auch Betriebsstörungen bei der Projektionseinrichtung, der Kamera und im Kommunikationsnetzwerk sicher erkannt.

Die Aufgabe wird insbesondere durch ein Verfahren gemäß dem Patentanspruch 1 und durch eine Anordnung gemäß dem Patentanspruch 7 gelöst.

Dabei wird ein Verfahren zur Überwachung eines Bereiches, insbesondere eines Gefahrenbereiches im Umfeld eines Roboters einer industriellen Automatisierungsanordnung, über das Eindringen eines Hindernisses, insbesondere einer Person vorgeschlagen, wobei wiederholt in einem ersten Schritt mittels zumindest einer Projektionseinrichtung ein Muster auf eine Fläche des zu überwachenden Bereiches, insbesondere auf den Fussboden, projiziert wird, in einem zweiten Schritt das Bild mittels zumindest einer Kamera aufgenommen und aus diesem Bild das aufgenommene Muster extrahiert wird, in einem dritten Schritt mittels einer Auswerteeinrichtung das aus dem Bild extrahierte Muster mit dem projizierten Muster verglichen wird, wobei bei einer signifikanten Abweichung der Muster voneinander das Vorliegen eines Hindernisses festgestellt wird und Sicherungsmaßnahmen initiiert werden. Dabei wird zwischen zwei Wiederholungen des ersten, zweiten und dritten Schrittes vor dem ersten Schritt das projizierte und im dritten Schritt für den Vergleich mit dem aus dem Bild extrahierten Muster herangezogene Muster zumindest teilweise verändert. Durch das geschilderte Verfahren müssen einige Komponenten, insbesondere die Projektionseinheit, das Kamerasystem und das Kommunikationsnetzwerk bei einem Sicherheitsnachweis nicht betrachtet werden und auch nicht in eigensicherer Variante vorgesehen werden, da eine sichere Fehleraufdeckung allein mit Hilfe der Auswerteeinrichtung möglich ist.

Die Lösung der Aufgabe sieht außerdem eine Anordnung zur Überwachung eines Bereiches, insbesondere eines Gefahrenbereiches im Umfeld eines Roboters einer industriellen Automatisierungsanordnung, über das Eindringen eines Hindernisses, insbesondere einer Person, vor, mit einer Projektionseinrichtung zur Projektion eines Musters auf eine Fläche des zu überwachenden Bereiches, insbesondere zur Projektion des Musters auf den Fußboden, mit zumindest einer Kamera zur Erfassung eines Bildes der Fläche und zu der Extraktion eines mit diesem Bild aufgenommenen Musters, und mit einer Auswerteeinrichtung zum Vergleich des aus dem Bild extrahierten Musters mit dem projizierten Muster, wobei vorgesehen ist, dass bei einer signifikanten Abweichung der Muster voneinander das Vorliegen eines Hindernisses festgestellt wird und Sicherungsmaßnahmen initiiert werden. Dabei ist vorgesehen, dass zwischen zwei Wiederholungen eines Vorganges aus Projektion, Erfassung und Auswertung das projizierte Muster zumindest teilweise verändert wird. Mit Hilfe dieser Anordnung können die bereits anhand des Verfahrens geschilderten Vorteile realisiert werden.

Vorteilhafte Ausgestaltungen der Erfindung sind in den abhängigen Patentansprüchen angegeben, wobei deren Merkmale sowohl einzeln, als auch in sinnfälliger Kombination miteinander realisiert werden können.

In einer vorteilhaften Variante wird in das zu projizierende Muster ein Bitmuster eingearbeitet, wobei dieses Bitmuster zumindest teilweise den zu verändernden Teil des Musters darstellt und somit regelmäßig, vorteilhaft nach jedem Prüfzyklus, verändert wird. Das Bitmuster kann in einer vorteilhaften Ausgestaltung ein pseudo-zufällig mit jeder Veränderung neu berechnetes "Zufallsmuster" sein. Entweder wird dieses Muster zentral erzeugt und auf sicherem Wege sowohl der Projektionseinrichtung als auch der Auswerteeinrichtung zur Verfügung gestellt, oder an beiden Stellen "dezentral" auf gleiche Weise, also demselben "seed" und mittels desselben Algorithmus, erzeugt. Es ist dazu auch möglich, jeweils eine allgemein zugängliche eine Uhrzeitinformation, insbesondere ein aus dem Funksignal DCF-77 abgeleitetes Zeitsignal, zu verwenden.

Ein Ausführungsbeispiel des erfindungsgemäßen Verfahrens und einer erfindungsgemäßen Anordnung wird nachfolgend anhand der Zeichnungen erläutert.

Dabei zeigen:

Figur 1 eine Anordnung aus Roboter, Steuerung/Auswerteein-richtung, Projektor und Kamera gemäß dem Stand der Technik, und

Figur 2: die zur Realisierung des Verfahrens notwendigen Funktionsblöcke der Steuerung bzw. Auswerteeinrich-tung.

In der Figur ist eine Anordnung mit einem Roboter A (Mehrachskinematik) dargestellt, in dessen Umgebung die Fläche F hinsichtlich des Eindringens oder Vorhandenseins eines Hindernisses H (hier: eine Person) überwacht werden soll. Der Roboter A ist mit einer Steuerung B verknüpft, wobei die Steuerung B im vorliegenden Fall auch die Auswerteeinrichtung umfasst. Weiterhin ist die Steuerung B mit einem Projektor C und einer Kamera D mittels Datenleitungen verbunden; dies ist im oberen Teil der Figur 1 durch verbindende Pfeile dargestellt.

Im vorliegenden Ausführungsbeispiel steuert die Steuerung B sowohl den Roboter A, als auch das erfindungsgemäße Überwachungsverfahren und stellt daher auch die Auswerteeinrichtung dar. In anderen Varianten der Erfindung kann jedoch auch eine separate Auswerteeinrichtung vorhanden sein, oder es können entsprechende Teile der Auswerteeinrichtung jeweils in dem Projektor C und in der Kamera D integriert sein. Für das Ausführungsbeispiel wesentlich ist, dass die nachfolgend als Auswerteeinheit beschriebenen Bestandteile der Steuerung B zumindest teilweise sicherheitsgerichtet ausgeführt sein sollen, d.h., dass diese Bestandteile eigensicher bzw. "Fail Save" sind, beispielsweise durch doppelt-redundante Ausführung der zugrunde liegenden Computer-Hardware, Watchdog-Einrichtungen oder dergleichen.

In der Figur 2 sind diejenigen Funktionseinheiten der Steuerung B bzw. einer separaten Auswerteeinheit dargestellt, die für die Ausführung des Überwachungsverfahrens und für die Absicherung der nicht-eigensicheren Systemkomponenten (hier Projektor C, Kamera D, und die Kommunikationswege zwischen der Steuerung B und dem Projektor C und der Kamera D) wesentlich sind. Andere Funktionseinheiten, die z.B. der Steuerung des Roboters A dienen und die für die Überführung des Roboters A in einen sicheren Zustand (z.B. Abschaltung) sorgen, sind aus Gründen der Übersichtlichkeit nicht dargestellt.

Bei den in der Figur 2 dargestellten Funktionsblöcken sind lediglich die Funktionsblöcke B1, B2 und B5 zwingend eigensicher auszuführen, d.h., dass eine Fehlfunktion aller anderen (nicht zwingend eigensicher ausgeführten) Funktionsblöcke zwar stören würde, aber als Fehler erkannt werden würden und somit auch zu einer Aktivierung eines sicheren Systemzustandes (z.B. Not-Abschaltung) führen würde.

Dabei wird eine Erweiterung des bekannten Verfahrens vorgeschlagen, bei der Fehler in den nicht-sicheren Komponenten Projektor C und Kamera D durch die sichere Komponente Steuerung B (alternativ: separate Auswerteeinrichtung) erkannt werden. Dadurch können Projektor C und Kamera D sowie die Kommunikation zu diesen Komponenten nicht-sicher implementiert sein, und es kann dennoch eine nachweisbar sichere Gesamtfunktion erreicht werden. Im Prinzip besteht die zur Erhöhung der Betriebssicherheit vorgeschlagene Erweiterung darin, das Projektionsbild regelmäßig zu verändern und in einer besonders vorteilhaften Variante in das Projektionsbild eine zufällige Bitsequenz einzubetten, die sich in jedem Prozess-Zyklus ändert. Die Bilderkennung muss diese Bitsequenz rekonstruieren. Dies ist nur möglich, wenn das Bild korrekt projiziert und wieder aufgenommen wurde, und wenn es nicht durch eine Person verdeckt ist.

Nach erfindungsgemäßer Erweiterung besteht das System aus folgenden Komponenten:

A) Roboter (Unverändert zum Stand der Technik).

B1) Funktion zur Berechnung des Polygons: sie berechnet aus den Sensordaten des Roboters die Projektion in Form einer Vektorgraphik, z.B. eines Polygons. Das Polygon kann dadurch in Form einer Menge von Vektoren gespeichert werden.

B2) Generator für zufällige Bitsequenz: generiert eine pseudo-zufällige Bitsequenz. In jedem Prozess-Zyklus wird eine neue Bitsequenz generiert.

B3) Generator für Rastergraphik: wandelt das Polygon in eine Rastergraphik, wobei die pseudo-zufällige Bitsequenz in die Kanten des Polygons, welche die abzusichernde Fläche umschreibt, eingebettet wird. Z. B. kann für jede 0 in der Bitsequenz ein gelber Abschnitt, und für jede 1 in der Bitsequenz ein schwarzer Abschnitt in der Rastergraphik erzeugt werden. Die erzeugten Abschnitte sollten auf dem Fußboden kleiner als 1cm sein, um sicherzustellen, dass mindestens ein Bit fehlt, wenn ein Teil der Projektion durch einen Menschen verdeckt ist.

C) Projektor (Unverändert zum Stand der Technik).

D) Kamerasystem (Unverändert zum Stand der Technik).

B4) Extraktor für Bitsequenz: unter Verwendung des erwarteten Polygons wird die im Kamerabild enthaltene Bitsequenz ermittelt. Zur Ermittlung der zum Polygon gehörenden Bildpunkte wird ein Algorithmus zum Zeichnen von Linien (z.B. Bresenham Algorithmus) verwendet. Aus den Farben der Bildpunkte kann die Bitsequenz generiert werden. Entspricht das Polygon im Kamerabild nicht dem erwarteten Polygon, oder ist ein Teil des Polygons im Kamerabild verdeckt, kann die Bitsequenz nicht ermittelt werden. Die Komponente B4 bricht entweder mit einer Fehlermeldung ab, oder liefert eine fehlerhafte Bitsequenz.

B5) Vergleichsinstanz: Die aus dem Kamerabild extrahierte Bitsequenz wird mit der erwarteten Bitsequenz verglichen. Stimmen beide Sequenzen überein, ist sichergestellt, dass Projektor und Kamera funktionieren, und dass keine Person den Gefahrenbereich betreten hat. Stimmen die Sequenzen nicht überein, ist dies nicht der Fall, und der Roboter wird sicher stillgesetzt.

E) Kommunikationsmittel (Unverändert zum Stand der Technik)

Die Funktionen B1, B2 und B5 sind sicherheitsgerichtet zu implementieren.
Eine sicherheitsgerichtete Implementierung der Funktionen B3 und B4 ist nicht notwendig.
Das Verfahren kann dahingehend erweitert werden, dass an Stelle von Polygonen (bestehend aus Strecken) auch beliebigeren geometrische Figuren (zusammengesetzt aus Strecken und Kurven, Kreise, Ellipsen usw.) verwendet werden.
Die Kommunikation zwischen Roboter A und Steuerung B ist in beide Richtungen sicherheitsgerichtet zu implementieren. Eine sicherheitsgerichtete Implementierung der Kommunikation zwischen B und C sowie zwischen D und B ist nicht notwendig.
Im Folgenden wird näher auf die Absicherung der Übertragungsstrecke mittels eines Bitmusters eingegangen. Ziel ist es, die Übertragungsstrecke (hier: Projektionseinrichtung incl. Erzeugung des Bitmusters, Projektion, Kamera, Musterextraktion) sicher auf korrekte Funktionsweise zu prüfen. Dabei sollen auch subtile Fehler (z.B. Ändern einzelner Bits, Versendung veralteter Daten etc.) gefunden werden. Die Übertragungsstrecke ist korrekt, wenn eine empfangene Bitfolge einer zuvor gesendeten Bitfolge entspricht.
Es wird vorgeschlagen, das Verfahren wie unten beschrieben in sicherheitsheitsgerichtete Schritte (Schritte A und D) und nicht-sicherheitsgerichtete (konventionell ausgeführte) Schritte (Schritte B und C) aufzuspalten. Vorteilhafterweise ist der Rechenaufwand in den sicherheitsgerichteten Schritten unabhängig von der Länge der Bitsequenz.
Dem liegt folgende Gliederung zugrunde:

Schritt A): Generierung einer Zufallszahl Z fester Länge (z.B. 32 Bit).

Schritt B): Generierung der Bitsequenz aus der Zufallszahl.

Schritt C): Rekonstruktion der Zufallszahl Z' aus der empfangenen Bitsequenz.

Schritt D): Vergleich zwischen Z und Z'.

In den nachfolgend beschriebenen Ausführungsbeispielen sind exemplarische Implementierungen für Schritte B und C skizziert. Wenn der Kommunikationskanal nicht ringförmig ist, d.h. die Schritte A und B einerseits sowie die Schritte C und D andererseits auf unterschiedlichen Geräten laufen, muss die Zufallszahl Z im Empfänger neu generiert werden. Dies wird dadurch erreicht, dass im Sender und Empfänger derselbe Zufallsgenerator mit demselben Startwert (Seed) verwendet wird.

In einem ersten Ausführungsbeispiel kann die Erzeugung des veränderlichen Bitmusters in der Steuerung (Auswerteeinrichtung) und die im Projektor beispielsweise jeweils wie folgt implementiert werden:

Implementierung von Schritt B:

Aus Z wird eine Folge X[i] von Wörtern generiert (Fibonacci-Folge) :

```
X[0] = Z
X[1] = Z
X[2] = (X[0] + X[1]) mod 232
X[3] = (X[1] + X[2]) mod 232
...
X[N] = (X[N-2] + X[N-1]) mod 232
```

Die Bitsequenz wird durch Konkatenation der Wörter X[1] bis X[N] gebildet, X[0] wird verworfen.

Implementierung von Schritt C:

Der empfangene Bitstring wird in Wörter X[1] bis X[N] gegliedert.
Anschließend wird jedem Wort X[i] ein weiteres Wort S[i] zugeordnet:

```
S[N+1] = 0;
sign = 1;
cnt = 0;
for (i=N; i>0; i--) {
  S[i] = (S[i+1]+X[i]*sign) mod 232;
  if(cnt==0) sign=-1;
  if(cnt==2) {sign=1;cnt=-1;}
  cnt++;
                  }
```

Zuletzt wird Z' wie folgt bestimmt:

```
IF S[1] == 0 THEN Z' = S[2]
          ELSE Z' = S[1]
```

Dieses erste Ausführungsbeispiel erkennt alle Einzelbitfehler.
In einem weiteren Ausführungsbeispiel sollen auch Mehrfachfehler erkannt werden, dazu kann das zuvor beschriebene Ausführungsbeispiel wie folgt erweitert werden:

Implementierung von Schritt B:

X[1] bis X[N-1] werden wie oben ermittelt.
X[N] = CRC(X[1], X[2], .... X[N-1]), d.h. X[N] wird mittel zyklischer Redundanzprüfung unter Verwendung eines geeigneten Polynoms berechnet. Die Länge des Polynoms entspricht der Wortlänge.

Implementierung von Schritt C:

Berechnung von Z' wie oben, es fließen jedoch nur die Werte X[N-1] bis X[1] ein. Zusätzlich wird X'[N] = CRC(X[1], X[2], .... X[N-1]) aus den empfangen Daten berechnet.

Anschließend wird der Wert Y' durch exklusive Disjunktion aus X'[N] und Z' gebildet:

$$Y' = Z' \ XOR \ X'[N]$$

Implementierung von Schritt D:

Die Funktion D erhält den Werte Z von A, den Wert X[N] von B, sowie den Wert Y' von C. Zunächst wird der Wert Y = Z XOR X(N) gebildet. Durch einen Vergleich von Y mit Y' kann dann auf Fehlerfreiheit geprüft werden. Da in Y und Y' jeweils auch die CRC-Prüfsumme einfließt, können durch dieses Verfahren auch Mehrfach- und Bündelfehler erkannt werden.

Im Falle einer nicht-ringförmigen Verbindung müssen Schritte A und B sowohl im Sender, als auch im Empfänger implementiert sein. Schritte C und D sind lediglich im Empfänger zu implementieren.

Die grundliegende Idee besteht in einer Aufteilung der Prüffunktion in "sicherheitsgerichtete" und "konventionelle" Komponenten. Die Aufteilung und Implementierung erfolgt so, dass ein Fehler in den konventionell aufgebauten Komponenten (z.B. Verfälschung von Bits, Vertauschung von Wörtern oder Verwendung veralteter Werte) mit hoher Wahrscheinlichkeit mit Hilfe der "eigensicher" aufgebauten Komponenten erkannt werden kann. Dies bedeutet, dass in der Praxis nur die anderen Komponenten sicherheitsgerichtet implementiert werden müssen, um insgesamt eine sichere Gesamtfunktion zu erhalten. Dies hat den Vorteil, dass der Anteil der beispielsweise redundant oder "fail-safe" vorzusehenden Komponenten sehr klein und deren Implementierung besonders einfach und wenig fehleranfällig ist. Auch der Rechenaufwand der "sicheren" Komponenten ist sehr gering, und insbesondere unabhängig von der Länge der Prüfdaten. Dies ist vorteilhaft, da fehlersichere Komponenten oft über eine vergleichsweise geringere Rechenleistung verfügen. Außerdem sind Anpassungen und Erweiterungen leichter möglich. Werden lediglich Änderungen am nicht-sicherheitsgerichteten Teil durchgeführt, ist keine aufwendige Neubewertung des Gesamtsystems (ggf. inkl. Zertifizierung durch externe Stellen) notwendig.

## Patentansprüche

1. Verfahren zur Überwachung eines Bereiches, insbesondere eines Gefahrenbereiches, im Umfeld eines Roboters (A) einer industriellen Automatisierungsanordnung über das Eindringen eines Hindernisses, insbesondere einer Person (H),
wobei wiederholt
in einem ersten Schritt mittels zumindest einer Projektionseinrichtung (C) ein Muster auf eine Fläche (F) des zu überwachenden Bereiches, insbesondere auf den Fussboden, projiziert wird,
in einem zweiten Schritt das Bild mittels zumindest einer Kamera (D) aufgenommen und aus diesem Bild das aufgenommene Muster extrahiert wird,
in einem dritten Schritt mittels einer Auswerteeinrichtung (B) das aus dem Bild extrahierte Muster mit dem projizierten Muster verglichen wird, wobei bei einer signifikanten Abweichung der Muster voneinander das Vorliegen eines Hindernisses festgestellt wird und Sicherungsmaßnahmen initiiert werden,
**dadurch gekennzeichnet,**
**dass** zwischen zwei Wiederholungen des ersten, zweiten und dritten Schrittes vor dem ersten Schritt das projizierte und im dritten Schritt für den Vergleich mit dem aus dem Bild extrahierten Muster herangezogene Muster zumindest teilweise verändert wird.

2. Verfahren nach Patentanspruch 1,
**dadurch gekennzeichnet,**
**dass** der zwischen zwei Wiederholungen veränderte Anteil des Musters ein Bitmuster umfasst, wobei für die Veränderung des projizierten Musters das Bitmuster jeweils verändert wird.

3. Verfahren nach Patentanspruch 2,
**dadurch gekennzeichnet,**
**dass** zumindest ein Teil des Bitmusters ein zufälliges Bitmuster ist.

4. Verfahren nach Patentanspruch 2 oder 3,
**dadurch gekennzeichnet,**
**dass** das veränderte Bitmuster zwischen der Projektionseinrichtung und der Ausweiteeinrichtung synchronisiert wird.

5. Verfahren nach Patentanspruch 3,
**dadurch gekennzeichnet**
**dass** zur Erzeugung des zufälligen Bitmusters in der Projektionseinrichtung (C) und in der Auswerteeinrichtung (B) dasselbe Startmuster und derselbe Algorithmus für die zwischen den Wiederholungen jeweils vorzunehmenden Änderungen des Bitmusters verwendet werden.

6. Verfahren nach einem der vorhergehenden Patentansprüche,
**dadurch gekennzeichnet,**
**dass** aus den Bewegungsdaten und/oder den Programmierungsdaten des Roboters (A) zukünftige Bewegungen des Roboters vorausberechnet und daraus die Geometrie des zu überwachenden Bereiches jeweils neu berechnet und zur Anpassung der Größe und Lage des durch die Projektionseinrichtung (C) zu projizierenden Musters und des jeweiligen durch die Auswerteeinrichtung (B) erwarteten Bereiches mit dem Muster verwendet werden.

7. Anordnung zur Überwachung eines Bereiches, insbesondere eines Gefahrenbereiches im Umfeld eines Roboters einer industriellen Automatisierungsanordnung, über das Eindringen eines Hindernisses, insbesondere einer Person (H),
mit einer Projektionseinrichtung (C) zur Projektion eines Musters auf eine Fläche (F) des zu überwachenden Bereiches, insbesondere zur Projektion des Musters auf den Fußboden,
mit zumindest einer Kamera (D) zur Erfassung eines Bildes der Fläche (F) und zu der Extraktion eines mit diesem Bild aufgenommenen Musters, und
mit einer Auswerteeinrichtung (B) zum Vergleich des aus dem Bild extrahierten Musters mit dem projizierten Muster, wobei vorgesehen ist, dass bei einer signifikanten Abweichung der Muster voneinander das Vorliegen eines Hindernisses festgestellt wird und Sicherungsmaßnahmen initiiert werden,
**dadurch gekennzeichnet,**
**dass** vorgesehen ist, dass zwischen zwei Wiederholungen eines Vorganges aus Projektion, Erfassung und Auswertung das projizierte Muster zumindest teilweise verändert wird.

8. Anordnung nach Patentanspruch 7,
**dadurch gekennzeichnet,**
**dass** das Muster ein Bitmuster umfasst, wobei vorgesehen ist, dass zur Veränderung des projizierten Musters das Bitmuster verändert wird.

9. Anordnung nach Patentanspruch 8,
**dadurch gekennzeichnet,**
**dass** die Anordnung einen Pseudo-Zufallsgenerator zur Erzeugung eines zufälligen Bitmusters für die Verwendung in dem teilweise veränderten Bereiches des Musters umfasst.

10. Anordnung nach Patentanspruch 8 oder 9,
**dadurch gekennzeichnet,**
**dass** in der Anordnung eines Synchronisation des Bitmusters zwischen der Projektionseinrichtung (C) und der Auswerteeinrichtung (B) vorgesehen ist.

11. Anordnung nach Patentanspruch 9,
**dadurch gekennzeichnet,**
**dass** in der Projektionseinrichtung (C) und in der Auswerteeinrichtung (B) für die jeweilige Erzeugung des zufälligen Bitmusters dasselbe Startmuster und derselbe Algorithmus vorgesehen sind.

12. Anordnung nach einem der Patentansprüche 7 bis 11,
**dadurch gekennzeichnet,**
**dass** für die Auswerteeinrichtung (B) vorgesehen ist, dass aus den Bewegungsdaten und/oder den Programmierungsdaten des Roboters (A) zukünftige Bewegungen des Roboters (A) vorausberechnet und daraus die Geometrie des zu überwachenden Bereiches jeweils neu berechnet und zur Anpassung der Größe und Lage des durch die Projektionseinrichtung (C) zu projizierenden Musters und des jeweiligen durch die Auswerteeinrichtung (B) erwarteten Bereiches mit dem Muster verwendet werden.

# FIG 1
## (Stand der Technik)

| Roboter A | → | Steuerung B | → | Projektor C | | Kamera D |

H

A

F

# FIG 2

von A → **B1: Berechnung des Polygons**

**B3: Bitmap-Generierung** → zu C

Zufällige Bitsequenz

**B2: Generator Bitsequenz**

zu A ← **B5: Vergleich**

Extrahierte Bitsequenz

**B4: Extraktion der Bitsequenz** ← von D

**Europäisches Patentamt**
**European Patent Office**
**Office européen des brevets**

## EUROPÄISCHER RECHERCHENBERICHT

Nummer der Anmeldung

EP 17 18 2560

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 558 886 B1 (FRAUNHOFER GES FORSCHUNG [DE]; UNIV MAGDEBURG TECH [DE]) 5. März 2014 (2014-03-05) * Absatz [0001] - Absatz [0002] * * Absatz [0010] - Absatz [0032] * * Absatz [0034] - Absatz [0053] * * Seiten 1-3 * | 1-12 | INV. B25J9/16 F16P3/14 G01S17/02 |
| X | WO 2017/093197 A1 (KUKA ROBOTER GMBH [DE]) 8. Juni 2017 (2017-06-08) * Seite 3, Zeile 10 - Seite 11, Zeile 8 * * Seite 12, Zeile 5 - Seite 16, Zeile 7 * * Abbildungen 1,2 * | 1-12 | |
| X | EP 1 300 691 A2 (SICK AG [DE]) 9. April 2003 (2003-04-09) * Absatz [0001] - Absatz [0016] * * Absatz [0021] - Absatz [0045] * * Abbildungen 1-5 * | 1-5,7-11 | |
| X | DE 60 2004 009793 T2 (HONEYWELL INT INC [US]) 28. August 2008 (2008-08-28) * Absatz [0005] - Absatz [0009] * * Absatz [0023] - Absatz [0046] * * Absatz [0085] * * Abbildungen 1-4 * | 1-5,7-11 | RECHERCHIERTE SACHGEBIETE (IPC) B25J G05B F16P G01S G06T |
| A | EP 2 133 619 A1 (SICK AG [DE]) 16. Dezember 2009 (2009-12-16) * Absatz [0001] - Absatz [0004] * * Absatz [0009] - Absatz [0021] * * Absatz [0023] - Absatz [0030] * * Absatz [0038] * * Abbildung 1 * | 3,5,9,11 | |

Der vorliegende Recherchenbericht wurde für alle Patentansprüche erstellt

| Recherchenort | Abschlußdatum der Recherche | Prüfer |
|---|---|---|
| Den Haag | 20. März 2018 | Orobitg Oriola, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 18 2560

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2018

| Im Recherchenbericht angeführtes Patentdokument | | Datum der Veröffentlichung | Mitglied(er) der Patentfamilie | | Datum der Veröffentlichung |
|---|---|---|---|---|---|
| EP 2558886 | B1 | 05-03-2014 | EP | 2558886 A2 | 20-02-2013 |
| | | | US | 2013201292 A1 | 08-08-2013 |
| | | | WO | 2011128117 A2 | 20-10-2011 |
| WO 2017093197 | A1 | 08-06-2017 | DE | 102015224309 A1 | 08-06-2017 |
| | | | WO | 2017093197 A1 | 08-06-2017 |
| EP 1300691 | A2 | 09-04-2003 | AT | 310963 T | 15-12-2005 |
| | | | DE | 10143504 A1 | 20-03-2003 |
| | | | DE | 50205015 D1 | 29-12-2005 |
| | | | EP | 1300691 A2 | 09-04-2003 |
| | | | JP | 3999609 B2 | 31-10-2007 |
| | | | JP | 2003151048 A | 23-05-2003 |
| | | | US | 2003075675 A1 | 24-04-2003 |
| DE 602004009793 | T2 | 28-08-2008 | DE | 602004009793 T2 | 28-08-2008 |
| | | | EP | 1634259 A1 | 15-03-2006 |
| | | | US | 2004256541 A1 | 23-12-2004 |
| | | | US | 2007131850 A1 | 14-06-2007 |
| | | | WO | 2004114243 A1 | 29-12-2004 |
| EP 2133619 | A1 | 16-12-2009 | DE | 202008017729 U1 | 10-06-2010 |
| | | | EP | 2133619 A1 | 16-12-2009 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHRISTIAN VOGEL ; MAIK POGGENDORF ; CHRISTOPH WALTER ; NORBERT ELKMANN.** Towards Safe Physical Human-Robot Collaboration: A Projection-based Safety System. *IEEE/RSJ International Conference on Intelligent Robots and Systems,* 25. September 2011